**Europäisches Patentamt**

**European Patent Office**

**Office européen des brevets**

(19)

(11) Veröffentlichungsnummer : **0 427 878 B1**

(12)

# EUROPÄISCHE PATENTSCHRIFT

(45) Veröffentlichungstag der Patentschrift :
**02.09.92 Patentblatt 92/36**

(51) Int. Cl.$^5$ : **C01G 23/07**

(21) Anmeldenummer : **89120996.7**

(22) Anmeldetag : **13.11.89**

(54) **Verfahren und Vorrichtung zur Herstellung von Titandioxid.**

(43) Veröffentlichungstag der Anmeldung :
**22.05.91 Patentblatt 91/21**

(45) Bekanntmachung des Hinweises auf die
Patenterteilung :
**02.09.92 Patentblatt 92/36**

(84) Benannte Vertragsstaaten :
**BE DE ES FR GB IT NL**

(56) Entgegenhaltungen :
**GB-A- 1 111 411**

(56) Entgegenhaltungen :
**GB-A- 1 170 924**
**US-A- 3 449 076**
**US-A- 3 505 091**
**US-A- 3 735 000**

(73) Patentinhaber : **KRONOS TITAN-Gesellschaft
mbH
Peschstrasse 5 Postfach 10 07 20
W-5090 Leverkusen 1 (DE)**

(72) Erfinder : **Hartmann, Achim, Dipl.-Ing.
Lucas-Cranach-Strasse 18
W-5024 Pulheim (DE)**

**EP 0 427 878 B1**

## Beschreibung

Die Erfindung betrifft ein Verfahren zur Herstellung von Titandioxid durch Reaktion von dampfförmigem $TiCl_4$ und gegebenenfalls kleineren Mengen anderer dampfförmiger Metallhalogenide mit Sauerstoff unter Druck.

Bei einem derartigen Verfahren muß das Gemisch aus $TiCl_4$ und Sauerstoff in der Reaktionszone zumindest eine Temperatur von ca. 1 000 °C aufweisen, damit die Oxidation spontan und vollständig abläuft.

Um dies zu erreichen, kann man z. B. einen oder beide Reaktionspartner so stark erhitzen, daß sie beim Vermischen ein entsprechend heißes Gemisch ergeben und die Reaktionspartner danach in der Reaktionszone zusammenführen. So hat man vorgeschlagen, Sauerstoff zunächst in einem Wärmeaustauscher auf eine Temperatur von 800-1300 °C erhitzen und danach in der Vorheizzone einer Reaktionskammer durch direkten Kontakt mit heißen Gasen, die bei der Verbrennung eines flüssigen Kohlenwasserstoffs, z. B. von Toluol, entstehen auf eine Temperatur von bis zu 1800 °C weiter zu erhitzen, so daß sich beim anschließenden Mischen mit dem auf ca. 450 °C erhitzten $TiCl_4$ in der Reaktionszone ein Gasgemisch mit der nötigen Temperatur für eine spontane Reaktion zu $TiO_2$ ergibt (US-A-3 449 076).

Dabei treten aufgrund der Verbrennung des flüssigen Kohlenwasserstoffs in der Reaktionskammer örtlich Temperaturen von 2500-3000 °C auf, die es, da eine Wasserkühlung der Kammerwände schwerwiegende Nachteile mit sich bringt, nötig machen, die Reaktionskammer zumindest in dem Bereich, wo diese Verbrennung stattfindet, mit feuerfestem keramischen Material auszukleiden. Jedoch sind die thermischen Belastungen oftmals noch so groß, daß die keramische Auskleidung relativ schnell in einem Ausmaß zerstört wird, daß nur ein unbefriedigend kurzer Betrieb mit einer solchen Brennkammer möglich ist. Danach muß die Innenauskleidung der Kammer in einer langwierigen und kostspieligen Reparatur wieder erneuert werden.

Man hat auch schon vorgeschlagen, die aus keramischen Material bestehenden Innenwände einer Reaktionskammer zur Gasphasenoxidation von Titantetrachlorid dadurch vor dem Angriff der heißen Gase der Hilfsflamme zu schützen, daß man den Sauerstoff mit einer Temperatur, die höchstens ein wenig über der Raumtemperatur liegt, in die Brennkammer einführt und dafür Sorge trägt, daß er im Bereich der Hilfsflamme einen Schutzfilm an der Innenwand der Reaktionskammer bildet (DE-A-20 37 990).

Der Nachteil dieser Vorgehensweise ist, daß dabei eine wesentlich größere Wärmemenge dem Reaktionsgemisch aus $TiCl_4$ und Sauerstoff durch die Hilfsverbrennung zugeführt werden muß. Daher wird eine entsprechend größere Menge Brennstoff benötigt. Heute ist aber die Verwendung von Kohlenwasserstoffen als Brennstoff für die Hilfsverbrennung üblich, da sich diese relativ gut handhaben lassen. Das bei der Verbrennung der Kohlenwasserstoffe entstehende Wasser wird zu HCl umgesetzt, bindet also entsprechende Mengen Chlor, das nicht mehr für die Chlorierung von frischem titanhaltigen Material zur Verfügung steht. Je größer die Menge Brennstoff also ist, die für die Hilfsverbrennung verwendet werden muß, desto größer ist der Chlorverlust. Außerdem wird die Abgasreinigung komplizierter, wenn große Mengen HCl-Gas im Abgas enthalten sind. Zwar ist es möglich, das aus dem Abgas ausgewaschene HCl-Gas zu Salzsäure zu verarbeiten, diese ist jedoch nur schwer absetzbar und ihr Verkaufserlös kann nur einen geringen Teil der entstandenen Kosten ersetzen.

Aufgabe der vorliegenden Erfindung ist es daher, ein Verfahren und eine Vorrichtung zur Herstellung von Titandioxid durch Gasphasenoxidation von $TiCl_4$ mit Sauerstoff zur Verfügung zu stellen, die nur einen niedrigen Brennstoffbedarf für die Hilfsflamme erfordern und dennoch lange Standzeiten der Reaktionskammer erlauben, ohne daß zwischenzeitlich die feuerfesten Keramikinnenwände der Kammer ausgebessert werden müssen.

Diese Aufgabe wird erfindungsgemäß gelöst durch ein Verfahren zur Herstellung von Titandioxid durch Reaktion von dampfförmigem $TiCl_4$ und gegebenenfalls kleineren Mengen anderer dampfförmiger Metallhalogenide mit Sauerstoff unter einem Druck von 2,4 bis 3,4 bar, bei dem

– man den zur Reaktion nötigen Sauerstoff indirekt auf eine Temperatur zwischen 850 und 1000 °C erhitzt,
– man eine einseitig geschlossene Reaktionskammer mit einer sich von dem geschlossenen Ende aus erstreckenden Vorheizzone für den Sauerstoff und einer sich daran anschließenden Reaktionszone verwendet, wobei die verwendete Kammer innen um ihre Längsachse i. W. rotationssymmetrisch ist, ihre Innenwände zumindest im Bereich der Vorheizzone aus feuerfestem Material sind, ihre geschlossene Seite so ausgestaltet wurde, daß der Innenraum der Kammer dort annähernd plan abgeschlossen wird, und die Kammer zumindest im Bereich der Vorheizzone keine stufenförmig verlaufenden Änderungen ihres Innendurchmessers aufweist,
– man den indirekt erhitzten Sauerstoff unmittelbar an dem verschlossenen Ende der Reaktionskammer gleichmäßig über den gesamten Umfang der Vorheizzone verteilt durch einen sich in der inneren Umfangswand der Kammer befindlichen Ringspalt so in die Reaktionskammer einleitet, daß die Strömung des Sauerstoffs im Ringspalt durch eine Reynoldszahl zwischen 15000 und 20000 charakterisiert ist und das Verhältnis dieser Reynoldszahl zum Innendurchmesser der Vorheizzone am Ringspalt, gemessen in Millimetern, zwischen 25 und 50 liegt,

– man den eingeleiteten Sauerstoff in der Vorheizzone durch Verbrennung eines gasförmigen und/oder flüssigen Brennstoffs und direkten Kontakt mit dessen heißen Verbrennungsgasen auf eine Temperatur weiter erhitzt, die zu einer i. W. vollständigen Oxidation aller Metallhalogenide ausreichend ist, und danach in der Reaktionszone mit dem dort zugeführten $TiCl_4$ und den gegebenenfalls verwendeten anderen Metallhalogeniden umsetzt, und

– man das entstandene Titandioxid isoliert.

Bei Durchführung des erfindungsgemäßen Verfahrens wird ein ausgezeichneter Schutzfilm aus dem 850 bis 1000 °C heißen Sauerstoff entlang der Innenwände der Reaktionskammer insbesondere in der Vorheizzone erzeugt, und zwar sowohl entlang der Umfangswand als auch entlang der Stirnwand an der verschlossenen Seite der Reaktionskammer.

Dieser Sauerstofffilm schützt die Keramikinnenverkleidung der Vorheizzone insbesondere im Bereich der Hilfsflamme für die weitere Erhitzung des Sauerstoffs zuverlässig vor den dort herrschenden hohen Temperaturen. Dadurch ermöglicht das erfindungsgemäße Verfahren 10 bis 70 mal längere Betriebszeiten ohne zwischenzeitliche Erneuerung der keramischen Innenverkleidung der Reaktionskammer, als bei Verwendung einer Reaktionskammer mit anderer Sauerstoffführung möglich waren.

Eine solche Schutzwirkung des Films aus heißem Sauerstoff war aber nicht zu erwarten, weil ein Gasfilm gewöhnlich nur dann eine Schutzbarriere gegenüber einem heißen Gas bildet, wenn die Temperatur des zum Schutz verwendeten Gasfilms sehr niedrig ist, so daß sich ein sehr großer Unterschied in der Zähigkeit und Dichte beider Gase ergibt, auf Grund dessen eine Durchdringung der Gase erschwert und ihre Durchmischung verzögert wird.

Der für die Oxidation des Titantetrachlorids nötige Sauerstoff wird beim erfindungsgemäßen Verfahren durch indirekte Erhitzung, also ohne Vermischung oder Reaktion mit dem Erhitzungsmedium, auf eine Temperatur von 850 bis 1000 °C erhitzt, bevor er der Reaktionskammer zugeführt wird. Es wird bevorzugt, wenn diese Temperatur möglichst hoch liegt, so daß in der Vorheizzone der Reaktionskammer möglichst wenig Brennstoff verbrannt werden muß.

Selbstverständlich muß jedoch gewährleistet sein, daß auch bei Dauerbetrieb keine Korrosionserscheinungen, Verzunderung oder sonstwie geartete chemische Reaktionen am Material der Apparaturen für die indirekte Beheizung des Sauerstoffs oder den Zuführungsleitungen für den heißen Sauerstoff zur Reaktionskammer erfolgen.

Es ist auch günstig, den Strom des Titantetrachlorids vor seiner Einleitung in die Oxidationszone der Reaktionskammer schon möglichst weit auf indirekte Weise zu erhitzen.

Die indirekte Erhitzung von Sauerstoff und Titantetrachlorid kann beispielsweise dadurch erfolgen, daß man die Gase durch gasbefeuerte Schlangenwärmeaustauscher leitet.

Bei Verwendung bekannter hoch hitze- und korrosionsfester Legierungen, läßt sich der Sauerstoff auf diese Weise bis ca. 1100 °C und das Titantetrachlorid bis etwa 500 °C erhitzen.

Der Sauerstoff muß danach in der Vorheizzone der Reaktionskammer noch so weit erhitzt werden, daß das Gemisch aus Sauerstoff und $TiCl_4$ in der Reaktionszone mindestens die für die spontane Reaktion nötige Starttemperatur von ca. 1000 °C aufweist.

Da eine vollständige Reaktion des $TiCl_4$ zu Titandioxid bekanntlich einen Sauerstoffüberschuß erfordert, reicht es bei Vorheizung des Titantetrachlorids auf beispielsweise ca. 450 °C aus, den Sauerstoff in der Vorheizzone auf etwa 1500-1650 °C zu erhitzen, um die oben genannte Mindesttemperatur für die Titandioxidbildung zu gewährleisten.

Dazu wird der indirekt vorgeheizte Sauerstoff in die Vorheizzone der Reaktionskammer geleitet und dort mit den heißen Verbrennungsgasen, die beim Verbrennen eines flüssigen und/oder gasförmigen Brennstoffs entstehen, in direkten Kontakt gebracht.

Als Brennstoffe besonders geeignet sind gasförmige oder flüssige Kohlenwasserstoffe, die gegebenenfalls mit zusätzlichem Sauerstoff durch eine (Zerstäuber-) Düse in die Vorheizzone der Reaktionskammer eingeblasen und nötigenfalls gezündet werden. Die Kohlenwasserstoffe sollen ein möglichst niedriges Verhältnis von Wasserstoff zu Kohlenstoff aufweisen. Gut geeignet ist Toluol als Brennstoff, mit dem sich eine Temperatur von 2500-3000 °C für die Verbrennungsgase erreichen läßt. Das erfindungsgemäße Verfahren kann jedoch auch mit anderen Brennstoffen, z. B. Kohlenmonoxid, betrieben werden.

Wesentlich für die Erfindung ist, daß der Sauerstoff so in die Vorheizzone der Reaktionskammer eingeleitet wird, daß er dort einen gleichmäßigen Schutzfilm entlang den gefährdeten Innenwänden der Kammer bildet.

Dazu ist einmal erforderlich, eine speziell ausgestaltete Reaktionskammer einzusetzen. Die Kammer muß innen um ihre Längsachse i. W. rotationssymmetrisch sein. Sie darf zumindest im Bereich der Vorheizzone keine stufenförmig verlaufenden Änderungen ihres Innendurchmessers aufweisen. Dies bedeutet, daß keine abrupten Änderungen des Kammerinnendurchmessers auftreten dürfen, also Änderungen, die auf einer sehr kurzen Strecke, in axialer Richtung der Reaktionskammer gesehen, erfolgen und an denen der Schutzfilm aus Sauerstoff von der Innenwand abreißen und/oder verwirbeln würde. Der Durchmesser des Innenraums der Reaktionskammer braucht jedoch nicht konstant zu bleiben und kann sich allmählich ändern. Beispielsweise kann der Innenraum der Vorheizzone kegelstumpfartige Abschnitte umfassen.

Die Reaktionskammer muß außerdem an der geschlossenen Seite so ausgestaltet sein, daß der Innenraum der Kammer dort annähernd plan abgeschlossen wird.

Der indirekt erhitzte Sauerstoff muß unmittelbar an dem verschlossenen Ende der Reaktionskammer durch einen Ringspalt in der Umfangswand der Kammer eingeleitet werden. Dies wird in der Art bewerkstelligt, daß man den Sauerstoff durch einen Ringspalt zwischen der feuerfesten Innenverkleidung der Umfangswand der Reaktionskammer und der ihrer Stirnwand in die Vorheizzone einführt.

Die Strömung des Sauerstoffs im Ringspalt muß dabei durch eine Reynoldszahl zwischen 15000 und 20000 charakterisiert sein, wobei sich diese Werte auf einen Innendruck in der Kammer von 2,4 bis 3,4 bar (d. h. 1,4 bis 2,4 bar Überdruck), beziehen. Da i. d. R. die $TiO_2$-Leistung einer Reaktionskammer vorgegeben ist und folglich auch der benötigte Sauerstoff pro Zeiteinheit festliegt, ist es am günstigsten, die benötigte Reynoldszahl für den Sauerstoffstrom im Ringspalt durch eine geeignet gewählte Spaltbreite einzustellen.

Schließlich ist beim erfindungsgemäßen Verfahren noch der Zusammenhang zwischen der Strömung des heißen Sauerstoffs im Ringspalt und dem Innendurchmesser der Vorheizzone am Ringspalt kritisch. Das Verhältnis zwischen der Reynoldszahl, die die Strömung des heißen Sauerstoffs im Ringspalt charakterisiert, und dem Innendurchmesser der Vorheizzone am Ringspalt, gemessen in Millimetern, muß zwischen 25 und 50 liegen.

Das erfindungsgemäße Verfahren ist insbesondere für die Herstellung von Titandioxidpigment geeignet.

Zusätzlich zu dampfförmigem Titantetrachlorid können dem Reaktionsgemisch dabei in üblicher Weise kleinere Mengen anderer dampfförmiger Metallhalogenide z. B. $AlCl_3$, $ZrCl_4$ zugesetzt werden, um in bekannter Weise bestimmte erwünschte Pigmenteigenschaften zu erreichen. Beispielsweise können diese Metallhalogenide mit dem Strom des Titantetrachlorids gemischt der Reaktionszone zugeführt werden.

Bei einer besonders vorteilhaften Ausführungsform des erfindungsgemäßen Verfahrens wird das entstandene Titandioxid durch Abkühlung der in der Reaktionskammer gebildeten Suspension aus Titandioxid und Gasen, Abtrennung des Titandioxids von diesen Gasen in einer Sackfilteranlage und Entfernung des Titandioxids aus der Filteranlage isoliert.

Eine Sackfilteranlage enthält bekanntlich in einem Gehäuse mehrere Filtersäcke, die von der Gassuspension durchströmt werden. Jeweils nach einer bestimmten Zeit werden einzelne oder mehrere der Säcke mit Spülgas in umgekehrter Richtung beaufschlagt und so von abgeschiedenem $TiO_2$ gereinigt, das danach durch eine Schleuse ausgetragen wird.

Mit steigender Betriebszeit einer solchen Anlage zur Herstellung von $TiO_2$ steigt der mittlere Druckabfall in der Filteranlage langsam an. Dies hängt damit zusammen, daß die Suspension aus $TiO_2$ und Gas noch geringe Anteile unumgesetztes $TiCl_4$ bzw. Metallhalogenide enthält, die beim Durchgang durch die Filteranlage das Gewebe der Filtersäcke und/oder eine auf dem Gewebe erzeugte $TiO_2$-Precoatschicht teilweise verkleben und somit verstopfen.

Eine Filteranlage kann jedoch nur bis zu einem bestimmten Maximalwert für den Druckabfall in der Anlage ordnungsgemäß betrieben werden. Wenn dieser erreicht ist, muß das Filter zerlegt und gereinigt werden. Dies bedeutet i. d. R. mehrere Stunden Stillstand bei einer Produktionsanlage.

Überraschenderweise hat sich nun gezeigt, daß bei Verwendung des erfindungsgemäßen Verfahrens auch eine Verstopfung der Filtersäcke viel später eintritt, so daß die Zeitabschnitte, nach denen die Sackfilteranlage jeweils gereinigt werden muß, zumindest doppelt so lang wie bisher sein können.

Neben der Zeitersparnis bedeutet dies auch eine wesentliche Materialersparnis. Die aus hochwertigem, korrosionsfestem Material hergestellten Filtersäcke werden nämlich oftmals durch die nötige Reinigungsprozedur so stark beansprucht, daß sie nach ca. vier Betriebsperioden der Filteranlage durch neue Säcke ersetzt werden müssen.

Gegenstand der Erfindung ist auch eine Vorrichtung zur Herstellung von Titandioxid durch Reaktion von dampfförmigem $TiCl_4$ und gegebenenfalls kleineren Mengen anderer dampfförmiger Metallhalogenide mit Sauerstoff unter einem Druck von 2,4 bis 3,4 bar,
die eine Reaktionskammer enthält,
die innen um ihre Längsachse i. W. rotationssymmetrisch und an einer Stirnseite so verschlossen ist, daß der Innenraum der Kammer dort annähernd plan abgeschlossen wird,
eine Vorheizzone für den Sauerstoff, die sich von der geschlossenen Seite der Kammer aus erstreckt, und daran anschließend eine Reaktionszone aufweist, wobei die Reaktionszone Zuführungen für das dampfförmige Titantetrachlorid und die gegebenenfalls verwendeten anderen Metallhalogenide und die Vorheizzone eine Einrichtung zur Zuführung und Verbrennung eines gasförmigen und/oder flüssigen Brennstoffs enthält und die Innenwände zumindest der Vorheizzone der Kammer aus feuerfestem Material bestehen oder entsprechend verkleidet sind, die Vorheizzone keine stufenförmig verlaufenden Änderungen ihres Innendurchmessers aufweist und einen Ringspalt enthält, der von dem feuerfesten Material der Umfangswand der Vorheizzone und dem ihrer Stirnwand gebildet wird und in den mit mehreren Enden eine Leitung für 800 - 1000 °C heißen Sauerstoff mündet, deren anderes Ende mit einer Einrichtung zur indirekten Erhitzung von Sauerstoff auf diese Temperaturen verbunden ist, wobei der Ringspalt eine Spaltbreite aufweist, daß er von dem 850 bis 1000 °C heißen Sauerstoff mit einer Strömung durchflossen wird, die durch eine Reynoldszahl zwischen 15000 und 20000 charakterisiert ist, und die Vorheizzone am Ringspalt einen solchen Innendurchmesser hat, daß das Verhältnis zwischen der Reynoldszahl, die den Sauerstoffstrom im Ringspalt charakterisiert, und diesem Durchmesser, gemessen in Millimetern, zwischen 25 und 50 liegt.

Die Reaktionskammer kann selbstverständlich aus mehreren Teilen zusammengesetzt sein. Ihr Innendurchmesser muß Werte zwischen 300 und 800 mm aufweisen.

Die feuerfeste Innenverkleidung kann aus einer oder mehreren konzentrischen Schichten eines keramischen Materials bestehen. Bevorzugt wird Oxidkeramik. Ganz besonders günstig ist es, wenn zumindest die den Innenraum der Reaktionskammer begrenzende Schicht der Verkleidung i. W. aus Aluminiumoxid besteht. Die keramische Auskleidung kann dabei beispielsweise aus einer entsprechenden gesinterten Stampfmasse bestehen.

Da eine gute Umsetzung von Titantetrachlorid und Sauerstoff in der Reaktionszone eine schnelle und gleichmäßige Mischung beider Gase erfordert, ist es günstig, wenn die Reaktionszone einen relativ kleinen Innendurchmesser aufweist, während die Vorheizzone der Reaktionskammer aufgrund der dort größeren Wärmebelastung besser einen größeren Durchmesser aufweisen sollte. Bei einer besonders bevorzugten Ausführungsform der erfindungsgemäßen Vorrichtung verjüngt sich daher der Innenraum der Reaktionskammer am Ende der Vorheizzone konisch auf den Durchmesser der Reaktionszone und diese weist radial angeordnete Zuführungen für das Titantetrachlorid auf. Die Reaktionszone kann beispielsweise so ausgebildet sein, wie es in der DE-B-15 92 529 beschrieben ist.

Eine weitere spezielle Ausführungsform der erfindungsgemäßen Vorrichtung ist dadurch gekennzeichnet, daß die Reaktionskammer, gegebenenfalls über ein Zwischenstück, mit einem Wärmeaustauscher zur Abkühlung der gebildeten Suspension aus Titandioxid und Gasen und dieser wiederum mit einer Sackfilteranlage zur Trennung des Titandioxids von den Gasen verbunden ist.

Ein Zwischenstück zwischen Reaktionskammer und Wärmeaustauscher kann z. B. nötig sein, wenn dem in der Reaktionszone gebildeten Gemisch bestimmte Substanzen zugegeben werden sollen, etwa Scheuerteilchen, um die Innenwände des nachfolgenden Wärmeaustauschers freizuhalten.

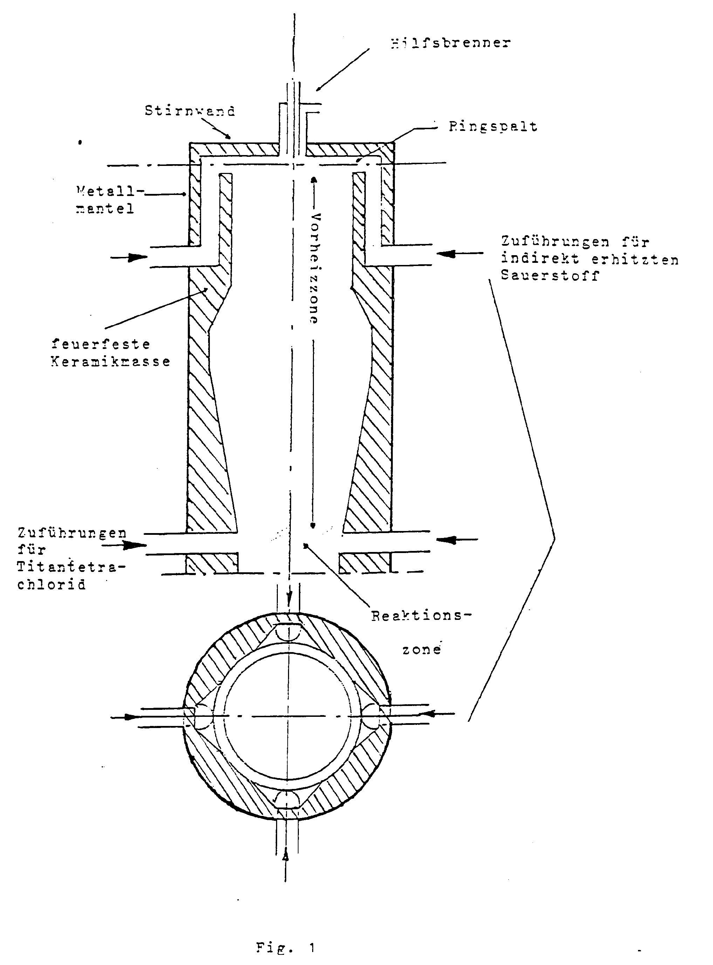

Fig. 1 zeigt schematisch eine Form von Reaktionskammer, die erfindungsgemäß eingesetzt werden kann. Diese weist einen Metallmantel auf, der innen mit einer feuerfesten Keramikmasse ausgekleidet ist. An einer Stirnseite ist die Reaktionskammer geschlossen, wobei der Innenraum der Kammer annähernd plan abschließt. Im Mittelpunkt dieser Stirnwand ist in axialer Richtung der Hilfsbrenner für die weitere Erhitzung des Sauerstoffs in der Vorheizzone angebracht. Der indirekt erhitzte Sauerstoff wird durch vier Zuführungen einem Ringspalt zugeleitet, der vom inneren Teil der feuerfesten Verkleidung der Umfangswand der Kammer und der ihrer Stirnwand gebildet wird, und gelangt so in das Innere der Reaktionskammer. Der Innendurchmesser der Kammer ist im Bereich der Vorheizzone zunächst konstant, nimmt danach langsam zu und bleibt dann wieder konstant. Am Ende der Vorheizzone verjüngt sich der Innenraum der Reaktionskammer konisch auf den Durchmesser der Reaktionszone, wo radial in der Umfangwand mehrere Zuführungen für Titantetrachlorid angebracht sind.

Die Erfindung soll nun an einem Beispiel erläutert werden.

Beispiel 1 (Vergleichsbeispiel)

In einer Produktionsanlage für Rutil-$TiO_2$- Pigment wurde ein Gemisch aus $TiCl_4$ und $AlCl_3$ im ungefähren molaren Verhältnis von 30:1 mit Sauerstoff unter einem Druck von ca. 2,9 bar umgesetzt und die entstandene Suspension aus Titandioxidpigmentteilchen (Teilchengröße ca. 0,4-0.7 μm) und Gasen in einem Wärmeaustauscher abgekühlt und in einer Sackfilteranlage in Festbestandteile und Gas getrennt.

Es wurde eine Reaktionskammer verwendet, die im Bereich der Vorheizzone innen mit einer insgesamt 180 mm starken Doppelschicht aus Isoliersteinen und darüberliegender Korundstampfmasse feuerfest verkleidet war. Die Reaktionskammer war an einer Stirnseite mit einem Deckel verschlossen, der nach innen ebenfalls in der oben genannten Art feuerfest verkleidet war. Die Vorheizzone wies auf den ersten 530 mm, von keramischen Innenverkleidung des Deckels ab gerechnet, einen konstanten Innendurchmesser von 640 mm auf. Im Mittelpunkt des Deckels war axial eine Zerstäuberdüse angebracht, mit deren Hilfe 90 l/h Toluol und 170 m³N/h Sauerstoff zugeführt wurden, die - nach Entzündung - unter Entwicklung ca. 2500-2700 °C heißer Verbrennungsgase miteinander reagierten. Sauerstoff wurde durch einen gasbefeuerten Schlangenwärmeaustau-

EP 0 427 878 B1

scher geleitet und dabei auf 950 °C aufgeheizt. 1610 m³ N/h dieses Sauerstoffs wurden ca. 300 mm von der Keramikverkleidung des Deckels der Brennkammer entfernt durch vier auf dem Umfang der Reaktionskammer verteilte Zuführungen radial in die heißen Verbrennungsgase des Hilfsbrenners eingeblasen, wobei die Strömungsgeschwindigkeit an der Einmündung in die Brennkammer ca. 102 m/sec betrug. Das heiße Gasgemisch strömte in axialer Richtung durch die Vorheizzone, wobei sich der Sauerstoff auf etwa 1600 °C erwärmte. In der dann folgenden Reaktionszone wurden radial in den heißen Gasstrom 12,5 t/h des auf ca. 450 °C vorgeheizten Gemisches aus TiCl$_4$ und AlCl$_3$ eingeblasen und mit dem Sauerstoff umgesetzt.

Bereits nach 300 Betriebsstunden war die gesamte Korundstampfmasse des Deckels stark verschmolzen, wobei ihre Wandstärke in Richtung zur Hilfsbrennerdüse stark abnahm. Die fehlende Stampfmasse fand sich teilweise als Schmelzling im unteren Teil der Vorheizzone der Reaktionskammer. Die keramische Innenverkleidung der Umfangswand der Kammer wies ebenfalls starke Verschmelzungen auf. Dieser Teil der Reaktionskammer und der Deckel mussten daher jeweils nach den oben genannten Zeiträumen mit einer neuen Wärmeschutzverkleidung versehen werden.

Beispiel 2

Es wurde unter den gleichen Betriebsbedingungen wie im Vergleichsbeispiel gearbeitet, zuvor wurde jedoch die keramische Verkleidung der Reaktionskammer entsprechend Fig. 1 modifiziert.

Die Korundverkleidung der Kammer war nun so ausgeführt, daß sich der Innendurchmesser der Reaktionskammer in Richtung auf den Deckel gesehen und beginnend 530 mm vor der keramischen Verkleidung des Deckels über eine Strecke von 200 Millimetern kontinuierlich von 640 Millimeter auf 480 Millimeter verkleinerte, woran sich ein 300 Millimeter langes Stück gleichen Innendurchmessers anschloß. 30 Millimeter vor der Keramikverkleidung des Deckels endete die Korundverkleidung der Seitenwand der Kammer, so daß dort ein Ringspalt mit einer Spaltbreite von 30 mm gebildet wurde. Von den vier Zuführungen in die Kammer für den heißen Sauerstoff erstreckten sich halbkreisförmige Kanäle von 60 Millimetern Halbmesser in der Korundmasse bis zu dem Ringspalt.

Durch die vier Zuführungen strömte der 950 °C heiße Sauerstoff mit einer Geschwindigkeit von 101 m/sec zu und trat mit 17,7 m/sec Strömungsgeschwindigkeit aus dem Ringspalt in das Kammerinnere aus. Die Reynoldszahl des Sauerstoffstroms im Ringspalt betrug 15990, das Verhältnis dieser Reynoldszahl zum Innendurchmesser der Vorheizzone am Ringspalt 33,3. Auch nach 9000 Betriebsstunden waren bei dieser Brennkammer keinerlei Schäden an der Keramikverkleidung der Vorheizzone aufgetreten, sondern diese befand sich in ausgezeichnetem Zustand.

Für die Sackfilteranlage, wie sie in den Beispielen verwendet wurde, betrug der maximal erlaubte Druckabfall am Filter 80 mbar.

Dieser wurde beim Arbeiten gemäß Beispiel 1 nach 52 Tagen Betrieb erreicht, so daß eine Filterreinigung nötig wurde. Beim erfindungsgemäßen Vorgehen nach Beispiel 2 betrug der Druckabfall am Filter unter sonst gleichen Bedingungen nach dieser Zeit erst ca. 40 mbar. Eine Filterreinigung wurde erst nach 92 Tagen durchgeführt, der Druckabfall am Filter betrug zu dieser Zeit nur 60 mbar. Eine Analyse des Abgases nach unumgesetztem TiCl$_4$ und AlCl$_3$ (Ti$_{lös.}$,Al$_{lösl.}$) ergab folgende Werte:

|  | Beispiel 1 | Beispiel 2 |
|---|---|---|
| Ti$_{lösl.}$ (mg/m³N) | 2,5 | 0,38 |
| Al$_{lösl.}$ (mg/m³N) | 0,17 | 0,07 |

Man kann erkennen, daß der Gehalt des Abgases an nicht verbranntem TiCl$_4$ und AlCl$_3$ bei Anwendung der erfindungsgemäßen Verfahrensform wesentlich niedriger ist, so daß eine vollständigere Oxidation in der Reaktionskammer stattgefunden hat.

**Patentansprüche**

1. Verfahren zur Herstellung von Titandioxid durch Reaktion von dampfförmigem TiCl$_4$ und gegebenenfalls kleineren Mengen anderer dampfförmiger Metallhalogenide mit Sauerstoff unter einem Druck von 2,4 bis 3,4 bar, bei dem
   – man den zur Reaktion nötigen Sauerstoff indirekt auf eine Temperatur zwischen 850 und 1000 °C erhitzt,

6

– man eine einseitig geschlossene Reaktionskammer mit einer sich von dem geschlossenen Ende aus erstreckenden Vorheizzone für den Sauerstoff und einer sich daran anschließenden Reaktionszone verwendet, wobei die verwendete Kammer innen um ihre Längsachse rotationssymmetrisch ist, ihre Innenwände zumindest im Bereich der Vorheizzone aus feuerfestem Material sind, ihre geschlossene Seite so ausgestaltet wurde, daß der Innenraum der Kammer dort annähernd plan abgeschlossen wird, und die Kammer zumindest im Bereich der Vorheizzone keine stufenförmig verlaufenden Änderungen ihres Innendurchmessers aufweist,

– man den indirekt erhitzten Sauerstoff unmittelbar an dem verschlossenen Ende der Reaktionskammer gleichmäßig über den gesamten Umfang der Vorheizzone verteilt durch einen sich in der inneren Umfangswand der Kammer befindlichen Ringspalt so in die Reaktionskammer einleitet, daß die Strömung des Sauerstoffs im Ringspalt durch eine Reynoldszahl zwischen 15000 und 20000 charakterisiert ist und das Verhältnis dieser Reynoldszahl zum Innendurchmesser der Vorheizzone am Ringspalt, gemessen in Millimetern, zwischen 25 und 50 liegt,

– man den eingeleiteten Sauerstoff in der Vorheizzone durch Verbrennung eines gasförmigen und/oder flüssigen Brennstoffs und direkten Kontakt mit dessen heißen Verbrennungsgasen auf eine Temperatur weiter erhitzt, die zu einer vollständigen Oxidation aller Metallhalogenide ausreichend ist, und danach in der Reaktionszone mit dem dort zugeführten $TiCl_4$ und den gegebenenfalls verwendeten anderen Metallhalogeniden umsetzt, und

– man das entstandene Titandioxid isoliert.

2. Verfahren nach Anspruch 1, bei dem man das entstandene Titandioxid durch Abkühlung der in der Reaktionskammer gebildeten Suspension aus Titandioxid und Gasen, Abtrennung des Titandioxids von diesen Gasen in einer Sackfilteranlage und Entfernung des Titandioxids aus der Sackfilteranlage isoliert.

3. Vorrichtung zur Herstellung von Titandioxid durch Reaktion von dampfförmigem $TiCl_4$ und gegebenenfalls kleineren Mengen anderer dampfförmiger Metallhalogenide mit Sauerstoff unter einem Druck von 2,4 bis 3,4 bar,

die eine Reaktionskammer enthält,

die innen um ihre Längsachse rotationssymmetrisch und an einer Stirnseite so verschlossen ist, daß der Innenraum der Kammer dort annähernd plan abgeschlossen wird,

eine Vorheizzone für den Sauerstoff, die sich von der geschlossenen Seite der Kammer aus erstreckt, und daran anschließend eine Reaktionszone aufweist, wobei die Reaktionszone Zuführungen für das dampfförmige Titantetrachlorid und die gegebenenfalls verwendeten anderen Metallhalogenide und die Vorheizzone eine Einrichtung zur Zuführung und Verbrennung eines gasförmigen und/oder flüssigen Brennstoffs enthält und die Innenwände zumindest der Vorheizzone der Kammer aus feuerfestem Material bestehen oder entsprechend verkleidet sind, die Vorheizzone keine stufenförmig verlaufenden Änderungen ihres Innendurchmessers aufweist und einen Ringspalt enthält, der von dem feuerfesten Material der Umfangswand der Vorheizzone und dem ihrer Stirnwand gebildet wird und in den mit mehreren Enden eine Leitung für 800 - 1000 °C heißen Sauerstoff mündet, deren anderes Ende mit einer Einrichtung zur indirekten Erhitzung von Sauerstoff auf diese Temperaturen verbunden ist, wobei der Ringspalt eine Spaltbreite aufweist, daß er von dem 850 bis 1000 °C heißen Sauerstoff mit einer Strömung durchflossen wird, die durch eine Reynoldszahl zwischen 15000 und 20000 charakterisiert ist, und die Vorheizzone am Ringspalt einen solchen Innendurchmesser hat, daß das Verhältnis zwischen der Reynoldszahl, die den Sauerstoffstrom im Ringspalt charakterisiert, und diesem Durchmesser, gemessen in Millimetern, zwischen 25 und 50 liegt.

4. Vorrichtung nach Anspruch 3, dadurch gekennzeichnet, daß die feuerfeste Innenverkleidung der Reaktionskammer, die gegebenenfalls aus mehreren Schichten bestehen kann, so zusammengesetzt ist, daß zumindest die zum Innenraum der Reaktionskammer liegende Schicht im wesentlichen aus Aluminiumoxid besteht.

5. Vorrichtung nach Anspruch 3 oder 4, dadurch gekennzeichnet, daß sich der Innenraum der Reaktionskammer am Ende der Vorheizzone konisch auf den Durchmesser der Reaktionszone verjüngt und die Reaktionszone radial angeordnete Zuführungen für das $TiCl_4$ aufweist.

6. Vorrichtung nach den Ansprüchen 3 bis 5, dadurch gekennzeichnet, daß die Reaktionskammer, gegebenenfalls über ein Zwischenstück, mit einem Wärmeaustauscher zur Abkühlung der gebildeten Suspension aus Titandioxid und Gasen und dieser wiederum mit einer Sackfilteranlage zur Trennung des Titandioxids

EP 0 427 878 B1

von den Gasen verbunden ist.

## Claims

1. A process for production of titanium dioxide by reaction of vaporous $TiCl_4$ and optionally smaller amounts of other vaporous metal halides with oxygen at a pressure of 2.4 to 3.4 bar, in which
   – the oxygen required by the reaction is heated indirectly to a temperature between 850 and 1000 °C,
   – a reaction chamber is used which is closed at one end, with a preheating zone for the oxygen extending outwards from the closed end and an adjacent reaction zone, the chamber used being rotationally symmetrical on the inside about its longitudinal axis, its internal walls, at least in the region of the preheating zone, being of refractory material, its closed end having been so shaped that the interior of the chamber is there closed off approximately flat, and the chamber, at least inthe region of the preheating zone, having no stepwise changes of internal diameter,
   – the indirectly heated oxygen is so introduced directly at the closed end of the reaction chamber into the reaction chamber, distributed uniformly over the whole circumference of the preheating zone through an annular gap located in the internal peripheral wall of the chamber, that the flow of the oxygen in the annular gap is characterized by a Reynolds number between 15,000 and 20,000 and the ratio of this Reynolds number to the internal diameter of the preheating zone at the annular gap, measured in millimetres, is between 25 and 50,
   – the oxygen introduced is further heated in the preheating zone by combustion of a gaseous and/or liquid fuel and direct contact with its hot combustion gases to a temperature which is sufficient for the complete oxidation of all metallic halides, and thereafter reacted in the reaction zone with the $TiCl_4$ fed there and the other metal halides optionally used, and
   – the titanium dioxide formed is isolated.

2. A process according to Claim 1, in which the titanium dioxide formed is isolated by cooling the suspension of titanium oxide and gases formed in the reaction chamber, separating the titanium dioxide from these gases in a bag filter unit and removing the titanium dioxide from the bag filter unit.

3. An apparatus for production of titanium dioxide by reaction of vaporous $TiCl_4$ and optionally smaller amounts of other vaporous metal halides with oxygen at a pressure of 2.4 to 3.4 bar,
   that contains a reaction chamber,
   that is rotationally symmetrical on the inside about its longitudinal axis and so closed at one end face that the interior of the chamber is there closed off approximately flat,
   a preheating zone for the oxygen which extends outwards from the closed end of the chamber and has an adjacent reaction zone, the reaction zone containing inlets for the vaporous titanium tetrachloride and the other metal halides optionally used and the preheating zone containing a device for feeding and burning a gaseous and/or liquid fuel, and the internal walls at least of the preheating zone of the chamber consisting of refractory material or being appropriately lined, the preheating zone having no stepwise changes of its internal diameter and containing an annular gap that is formed from the refractory material of the peripheral wall of the preheating zone and its end wall and into which several ends of a line for hot oxygen at 800-1000 °C discharge, the other end of the line being connected with a device for the indirect heating of oxygen to these temperatures, the annular gap having a width such that the hot oxygen at 850 to 1000 °C flows through it in a stream which is characterized by a Reynolds number between 15,000 and 20,000, and the preheating zone having an internal diameter at the annular gap such that the ratio of the Reynolds number that-characterizes the oxygen stream in the annular gap to this diameter, measured in millimetres, is between 25 and 50.

4. An apparatus according to Claim 3, characterized in that the refractory internal lining of the reaction chamber, which can optionally consist of several layers, is of such a composition that at least the layer at the interior of the reaction chamber consists in the main of aluminium oxide.

5. An apparatus according to Claim 3 or 4, characterized in that the interior of the reaction chamber tapers conically at the end of the preheating zone to the diameter of the reaction zone and the reaction zone has radially arranged inlets for the $TiCl_4$.

6. An apparatus according to Claims 3 to 5, characterized in that the reaction chamber is connected, optionally via a transition piece, with a heat exchanger for cooling the suspension formed from titanium dioxide and gases and.this is connected in turn with a bag filter unit for separating the titanium dioxide from the gases.

**Revendications**

1. Procédé de fabrication de dioxyde de titane par réaction de TiCl$_4$ à l'état de vapeur et, le cas échéant, de quantités plus faibles d'autres halogénures métalliques à l'état de vapeur avec de l'oxygène sous une pression de 2,4 à 3,4 bars, dans lequel
   – on chauffe indirectement l'oxygène nécessaire à la réaction à une température entre 850 et 1000°C,
   – on utilise une chambre de réaction fermée sur un côté avec une zone de préchauffage pour l'oxygène s'étendant à partir de l'extrémité fermée et une zone de réaction s'y rattachant, opération pendant laquelle la chambre utilisée est à symétrie de rotation intérieurement autour de son axe longitudinal, ses parois internes sont réalisées, tout au'moins dans le domaine de la zone de préchauffage, en un matériau réfractaire, son côté fermé a été agencé de telle manière que l'espace intérieur de la chambre y soit isolé de façon approximativement plane, et la chambre ne présente pas, du moins dans le domaine de la zone de préchauffage, de variations par paliers de son diamètre intérieur,
   – on introduit dans la chambre de réaction l'oxygène chauffé indirectement, réparti uniformément sur toute la périphérie de la zone de préchauffage au voisinage immédiat de l'extrémité fermée de la chambre de réaction à travers une fente annulaire disposée dans la paroi périphérique interne de la chambre de telle facon que l'écoulement de l'oxygène dans la fente annulaire se caractérise par un nombre de Reynolds entre 15000 et 20000 et que le rapport de ce nombre de Reynolds au diamètre intérieur de la zone de préchauffage à l'endroit de la fente annulaire, mesuré en millimètres, se situe entre 25 et 50,
   – on continue à chauffer l'oxygène introduit dans la zone de préchauffage par combustion d'un combustible gazeux et/ou liquide et mise en contact directe avec ses gaz de combustion chauds jusqu'à une température qui est suffisante pour une oxydation totale de tous les halogénures métalliques et le fait ensuite réagir dans la zone de réaction avec le TiCl$_4$ qui y est amené et les autres halogénures métalliques éventuellement employés, et
   – on isole le dioxyde de titane formé.

2. Procédé selon la revendication 1, dans lequel on isole le dioxyde de titane formé par refroidissement de la suspension de dioxyde de titane et de gaz formée dans la chambre de réaction, séparation du dioxyde de titane à partir de cas gaz dans une installation de filtration à poches et évacuation du dioxyde de titane hors de l'installation de filtration à poches.

3. Dispositif pour la fabrication de dioxyde de titane par réaction de TiCl$_4$ à l'état de vapeur et, le cas échéant, de quantité plus faibles d'autres halogénures métalliques à l'état de vapeur avec de l'oxygène sous une pression de 2,4 à 3,4 bars, lequel dispositif contient une chambre de réaction qui est à symétrie de rotation intérieurement autour de son axe longitudinal et est fermée sur un côté frontal de telle manière que l'espace intérieur de la chambre y est isolé de façon approximativement plane, une zone de préchauffage pour l'oxygène qui s'étend à partir du côté fermé de la chambre et comporte une zone de réaction s'y rattachant, la zone de réaction contient des conduites d'alimentation pour le tétrachlorure de titane à l'état de vapeur et les autres halogénures métalliques éventuellement employés et la zone de préchauffage contient une installation pour l'admission et la combustion d'un combustible gazeux et/ou liquide et les parois internes, tout au moins de la zone de préchauffage de la chambre, consistent en un matériau réfractaire ou sont revêtues en conséquence, la zone de préchauffage ne présente pas de variations par paliers de son diamètre intérieur et comporte une fente annulaire qui est formée par le matériau réfractaire de la paroi périphérique de la zone de.préchauffage et par celui de sa paroi frontale et dans laquelle débouche, avec plusieurs extrémités, une conduite pour l'oxygène chauffé à 800-1000°C dont une autre extrémité est reliée à un dispositif pour le chauffage indirect de l'oxygène à cette température, la fente annulaire présentant une largeur de fente telle qu'elle est parcourue par l'oxygène chauffé de 850 à 1000°C avec un débit qui est caractérisé par un nombre de Reynolds entre 15000 et 20000 et la zone de préchauffage à l'endroit de la fente annulaire possédant un diamètre intérieur tel que le rapport entre le nombre de Reynolds qui caractérise le courant d'oxygène dans la fente annulaire et ce diamètre, mesuré en millimètres, se situe entre 25 et 50.

4. Dispositif selon la revendication 3, caractérisé en ce que le revêtement intérieur réfractaire de la chambre de réaction qui peut éventuellement être constitué par plusieurs couches est formé de telle manière qu'au moins la couche orientée vers l'espace intérieur de la chambre de réaction soit essentiellement constituée par de l'oxyde d'aluminium.

5. Dispositif selon la revendication 3 ou 4, caractérisé en ce qu'à l'extrémité de la zone de préchauffage, l'espace intérieur de la chambre de réaction se rétrécit en forme de cône sur le diamètre de la zone de réaction et que la zone de réaction comporte des conduites d'admission à disposition radiale pour le TiCl$_4$.

6. Dispositif selon les revendications 3 à 5, caractérisé en ce que la chambre de réaction est reliée, éventuellement par l'intermédiaire d'une pièce intercalaire, à un échangeur de chaleur pour le refroidissement de la suspension de dioxyde de titane et de gaz formée et que cet échangeur est à son tour relié à une installation de filtration à poches pour la séparation du dioxyde de titane des gaz.

Hilfsbrenner

Stirnwand

Ringspalt

Metallmantel

Vorheizzone

Zuführungen für
indirekt erhitzten
Sauerstoff

feuerfeste
Keramikmasse

Zuführungen
für
Titantetrachlorid

Reaktionszone

Fig. 1